## Europäisches Patentamt

(19) **European Patent Office**

**Office européen des brevets**

(11) Veröffentlichungsnummer: **0 157 103**

**B1**

(12) **EUROPÄISCHE PATENTSCHRIFT**

(45) Veröffentlichungstag der Patentschrift:
02.09.87

(21) Anmeldenummer: **85100959.7**

(22) Anmeldetag: **31.01.85**

(51) Int. Cl.⁴: **B 29 C 47/06,** B 29 C 47/56

(54) Einrichtung zum Herstellen von flachen Profilsträngen aus plastischen Kautschuk- oder Kunststoffmischungen verschiedener Zusammensetzung durch Strangpressen.

(30) Priorität: **22.03.84 DE 3410535**

(43) Veröffentlichungstag der Anmeldung:
**09.10.85 Patentblatt 85/41**

(45) Bekanntmachung des Hinweises auf die Patenterteilung:
**02.09.87 Patentblatt 87/36**

(84) Benannte Vertragsstaaten:
**AT BE CH DE FR GB IT LI LU NL SE**

(56) Entgegenhaltungen:
**EP-A-0 047 146**
**AT-B-344 980**
**DE-A-2 813 613**
**DE-A-2 823 638**
**DE-A-3 042 180**

(73) Patentinhaber: **Continental Gummi- Werke Aktiengesellschaft, Königsworther Platz 1, D-3000 Hannover 1 (DE)**

(72) Erfinder: **Paul, Helmut, 3, Rue de la Chatellenie, F-57200 Sarreguemines (FR)**

LIBER, STOCKHOLM 1987

## Beschreibung

Die Erfindung bezieht sich auf Einrichtungen zum Herstellen von flachen Profilsträngen aus plastischen Kautschuk- oder Kunststoffmischungen verschiedener Zusammensetzung durch Strangpressen, insbesondere von Rohlaufstreifen für Luftreifen mit einem zweischichtigen Mittelteil und zwei untereinander gleichartigen Randteilen, mit zwei unter einem spitzen Winkel über- oder nebeneinander angeordneten und nach einem gemeinsamen Auspreßmundstück fördernden ersten Strangpressen und einer entgegen der Abzugsrichtung der Profilstränge an das Auspreßmundstück angesetzten dritten Strangpresse.

Es ist bekannt, Mehrschichten-Profilstränge durch Vereinigen der von mehreren eigenen Strangpressen geförderten Teilströme voneinander abweichenden Mischungsaufbaues in einem gemeinsamen Mundstück gleichzeitig mit der Formgebung oder dieser unmittelbar vorausgehend zusammenzusetzen und als zusammenhängendes einheitliches Gebilde auszupressen. In der Praxis wird hiervon beispielsweise zum Herstellen der Rohlaufstreifen für Fahrzeugluftreifen seit längerem schon mit Vorteil Gebrauch gemacht. Da die Laufstreifen nicht nur für das einwandfreie Einbauen in die Reifenrohlinge, sondern auch im Einsatz der fertigen Reifen im Fahrbetrieb in verschiedenen Querschnittsbereichen verschiedene Eigenschaften bevorzugt aufweisen müssen, sind sie in aller Regel grundsätzlich aus zwei oder noch mehr verschiedenen Elastomer-Mischungen zusammenzusetzen. Das innige Zusammenführen der Teilströme in einem einzigen allen Strangpressen gemeinsamen Preßkopf wirft aber erhebliche rheologische Probleme auf, die sich noch verschärfen, wenn - wie es beispielsweise für Laufstreifen mit den weit auseinanderliegenden schmalen Randteilen einer bestimmten Mischungsrezeptur zutrifft - die einzelnen Strömungswege stark voneinander abweichende Längen aufweisen. Mit bekannten Maßnahmen wie z. B. maßlichem Abstimmen der Strömungsquerschnitte aufeinander. Einsetzen von Strömungsbremsen u.a. ließen sich diese Schwierigkeiten, als deren Folge es immer wieder zu Ablöseerscheinungen und anderen Unregelmäßigkeiten an den fertigen Profilsträngen kam, nicht befriedigend beherrschen. Die Verhältnisse gestalten sich zwar wesentlich günstiger, wenn die dritte Strangpresse in der bekannten Y-Anordnung der Abzugsrichtung entgegen an das Auspreßmundstück angesetzt wird. Das druckdichte Verschrauben der drei Strangpressen untereinander oder auch das leichter lösbare Verklammern beispielsweise mit Hilfe von Bajonettverschlüssen macht aber außerordentlich schwere und teure Spezialkonstruktionen solcher Pressenköpfe notwendig. Es ist demgegenüber die Aufgabe der Erfindung, für die Y-Anordnung dreier Strangpressen zueinander mit konstruktiv einfachen und dementsprechend billig herzustellenden Mitteln eine zuverlässig dichtende und trotzdem leicht lösbare Verbindung insbesondere der dritten Strangpresse zu schaffen.

Nach der Erfindung zeichnet sich die Einrichtung der eingangs geschilderten Art dadurch aus, daß die dritte Strangpresse in Längsrichtung relativ zu den zwei ersten Strangpressen verschiebbar und in nur kraftschlüssiger Verbindung dichtend an das Auspreßmundstück angesetzt ist, wobei nach einem wichtigen Merkmal der Erfindung mindestens ein einen Endanschlag für die Auspreßdüse der dritten Strangpresse bildender nippelartiger Kontaktaufsatz auf der den zwei ersten Strangpressen abgekehrten Frontplatte des Auspreßmundstückes vorgesehen ist, dessen nach außen offene durchgehende Bohrung sich unter Richtungsänderung innerhalb des Mundstückes nach formgebenden Bereichen öffnet. Vorteilhaft ist jeder Kontaktaufsatz mit einer kugelig gewölbten Anschlagfläche ausgebildet, während die, Austrittsmündung(en) der Auspreßdüse der dritten Strangpresse mit dem jeweiligen Kontaktaufsatz angepaßter kugeliger Wölbung oder zum Erzielen eines für die Dichtigkeit günstigen höheren spezifischen Flächendruckes kegelig aufgeweitet ist bzw. sind.

Die Erfindung eröffnet vorteilhafte Möglichkeiten in der sogenannten "Triplex-Technologie". Der Begriff bezeichnet eine erst seit kurzem in Gang gekommene Weiterentwicklung der in der Luftreifen-Fertigung bisher gebräuchlichen Duplex-Anlagen zu einem Dreifach-Pressensystem, mit dem Laufstreifen-Verbundprofile aus drei und möglicherweise auch aus vier verschiedenen Kautschukmischungen maßgerecht und ohne die Gefahr von Lufteinschlüssen in einem einzigen Arbeitsgang gespritzt werden können. Während aber bekannte Anlagen dieser Art in Huckepackanordnung der drei Strangpressen übereinander oder in Radialaufstellung in einer Ebene mit gegenseitigen Winkelabständen verteilt aufgebaut sind, ermöglicht die neuartige bewegliche Anordnung der dritten Strangpresse in Gegenüberstellung zu dem Huckepack-Aggregat der beiden ersten Strangpressen mit überraschend einfachen konstruktiven Maßnahmen ohne Zugeständnisse an die Betriebssicherheit und die Zuverlässigkeit der Gesamt-Einrichtung extrem kurze Strömungswege für die von dieser Presse in das gemeinsame Auspreßmundstück eingespeiste Mischung, woraus sich wiederum besonders günstige Voraussetzungen für ein ungestörtes und einwandfreies Zusammenfließen ergeben. Da die dritte Presse erhöht über oder auch unter der Abzugsebene des Profilstranges aufgestellt werden kann, benötigt sie keine zusätzliche Bodenfläche, so daß der Platzbedarf für die gesamte Anlage praktisch nicht höher als für eine sonst übliche Duplex-Anlage ausfällt, während andererseits auch keine Behinderungen in der Bedienung, in der Zugänglichkeit zu den mit dem Abzug zusammenhängenden Vorrichtungen und zu den austretenden Profilsträngen selbst in Kauf zu nehmen sind. In weiterer Folge ergibt sich hieraus im Verein mit der Längsverschiebbarkeit der Presse ebenso ein freier Zugang zu dem Mundstück mit der Möglichkeit des einfachen und schnellen Umrüstens in Bedarfsfällen.

Für das ordnungsgemäße, störungsfreie Arbeiten der Anlage ist das absolut druckdichte Ansetzen der beweglichen dritten Strangpresse an das gemeinsame Auspreßmundstück von entscheidender Bedeutung. Mit den neuartigen Kontaktaufsätzen schafft die Erfindung eine in ihrer Wirkung bekannten Fettpressen mit Übergangsnippel entsprechende lösbare direkte Metall-auf-Metall-Verbindung, die nach allen Erfahrungen - die dafür notwendigen Anpreßkräfte vorausgesetzt - gegen extrem hohe Strömungsdrücke über lange Zeiträume zuverlässig abdichtet. Die Aufsätze sind zweckmäßig in der Längsachse der zugeordneten Presse ausgerichtet und sind daher in allen Fällen unter einem spitzen Winkel gegen die Abzugsrichtung des Profilstranges auf der Frontplatte des Auspreßmundstückes angebracht.

Wenn die Anordnung der dritten Strangpresse oberhalb oder unterhalb der Abzugsebene hinsichtlich des Platzbedarfs auch die größten Vorteile bietet, so schließt die Erfindung darüber hinaus noch die Möglichkeit ein, die bewegliche Presse in der Abzugsebene oder parallel dazu und unter einem spitzen Winkel gegen die Abzugsrichtung in Längsrichtung verschiebbar aufzustellen.

Die Erfindung ist anhand der schematischen Darstellung eines Ausführungsbeispiels in der Zeichnung verdeutlicht. Es zeigen:

Fig. 1 das Anordnungsschema einer neuartigen Triplex-Anlage in Seitenansicht:

Fig. 2 die Schnittdarstellung einer Einzelheit aus Fig. 1 in vergrößertem Maßstab und

Fig. 3 eine Variante zu der Ausführungsform gemäß Fig. 2.

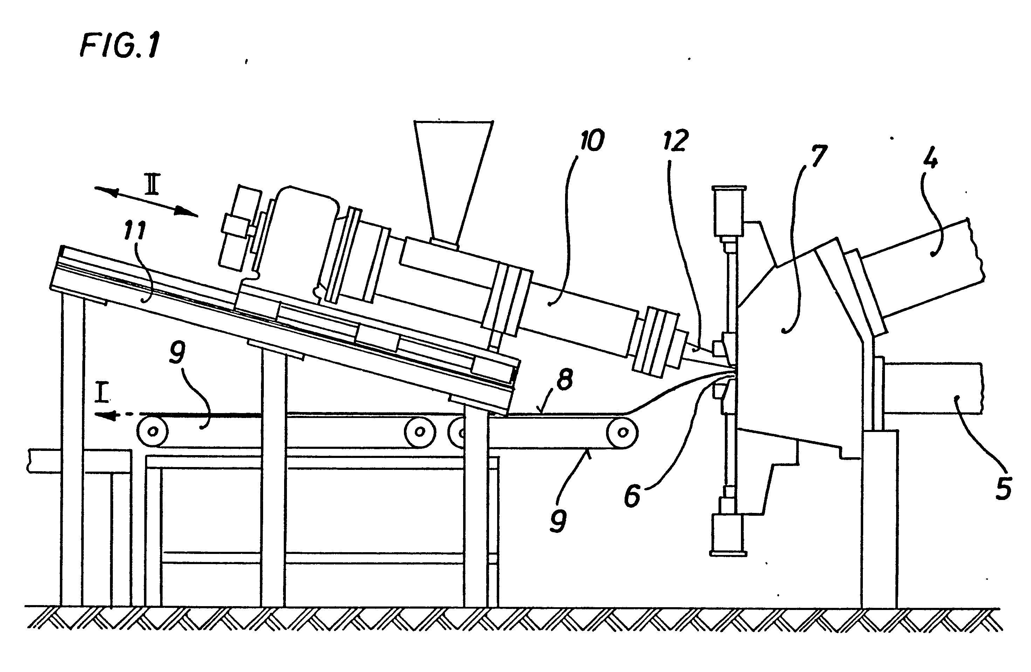

Die in Fig. 1 gezeichnete Anlage enthält zwei zu einer Baueinheit in Huckepackanordnung unter einem spitzen Winkel übereinandergesetzte Schnecken-Strangpressen 4, 5, die mit nicht weiter dargestellten Zuführ- und Antriebseinrichtungen versehen sind und nach einem gemeinsamen Auspreßmundstück 6 als Abschluß des beide Pressen verbindenden Pressenkopfes 7 hin fördern. In der angenommenen Verwendung der Anlage zum Herstellen von Rohlaufstreifen für Fahrzeugluftreifen - es sind daneben auch andere Einsatzgebiete wie z. B. Herstellen von Verbund-Dichtungsprofilen, Kabelummantelungen, Schläuchen, Fördergurten u. dgl. denkbar - liefern die beiden Pressen 4 und 5 die verschiedenen Mischungen für die Unterplatte und für die Lauffläche der Laufstreifen, während eine dritte Strangpresse 10 zum Zuführen der besonders bindefreudig eingestellten Mischung für die äußeren Randstreifen vorgesehen ist. Der fertig zusammengesetzte und ausgeformte Profilstrang 8 in Form des Rohlaufstreifens tritt aus dem Mundstück 6 auf eine Abzugsvorrichtung 9 über und wird in Richtung des Pfeiles 1 zum Weiterverarbeiten der nachfolgenden Reifenkonfektionierung bzw. zum Ablagern fortgeführt.

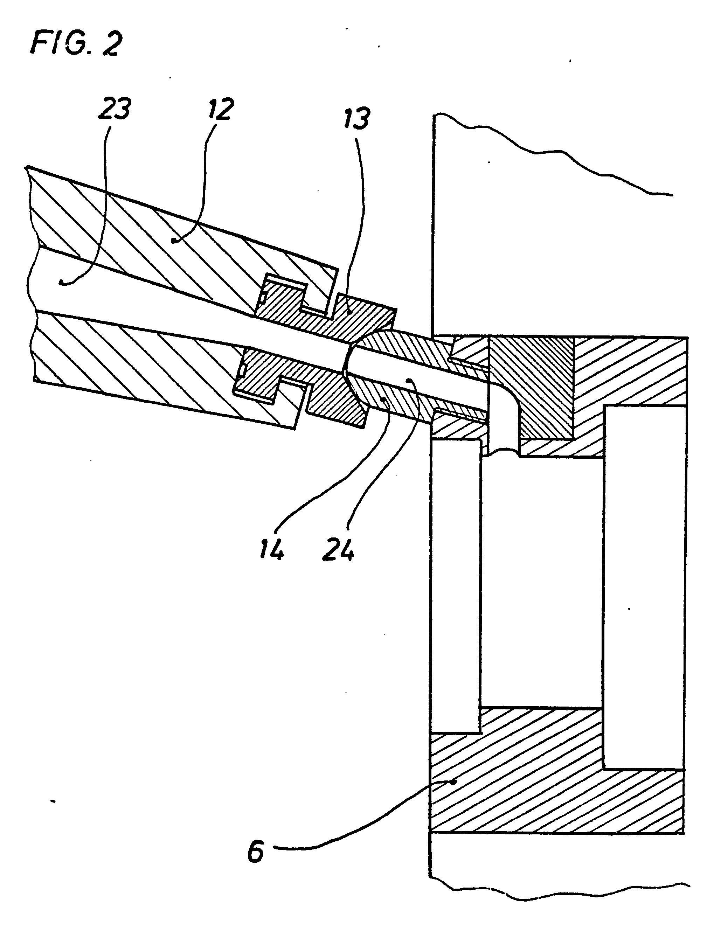

Die dritte Strangpresse 10 ist oberhalb der Abzugsvorrichtung 9 in Gegenüberstellung zu den beiden Pressen 4, 5 auf einem erhöhten Maschinengestell 11 unter einem spitzen Winkel gegen die Abzugsrichtung (Pfeil I) schräg geneigt in Richtung des Doppelpfeiles II verschiebbar so angeordnet, daß sie in der gezeichneten Arbeitsstellung mit ihrer Auspreßdüse 12 in unmittelbarem metallischen Kontakt an die Frontplatte des Auspreßmundstückes 6 stößt. Wie im einzelnen aus der Schnittzeichnung in Fig. 2 hervorgeht, trägt die Auspreßdüse 12 ein kegelig nach außen aufgeweitetes Einsatzstück 13, das in gleichachsiger Ausrichtung an einen schräg in das Auspreßmundstück 6 eingelassenen nippelartigen Kontaktaufsatz 14 anschlägt. Der Kontaktaufsatz 14 ist mit einer kugelig gewölbten Oberfläche ausgebildet, um eine druckdichte Anlage zu gewährleisten, und mündet mit seiner durchgehenden Bohrung 24 in Radialrichtung in das Mundstück 6 unmittelbar in dessen formgebendem Ausgangsbereich. Die von der Presse 10 geförderte Mischung wird infolgedessen auf dem kürzesten Wege durch die Bohrung 23 der Auspreßdüse 12 und des Einsatzstückes 13 über den Kontaktaufsatz 14 (Bohrung 24) in das allen drei Pressen gemeinsame Auspreß-Mundstück 6 überführt.

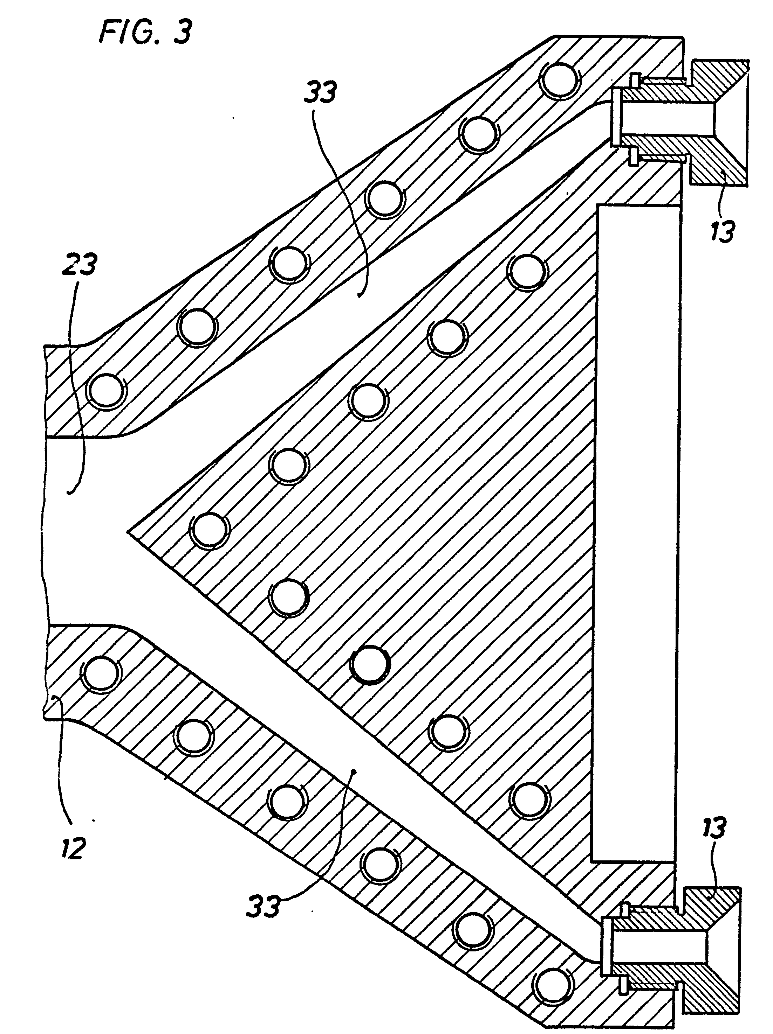

In Fig. 3 ist eine vorteilhafte Variante für die Zuleitung der Mischung zu den verhältnismäßig weit voneinander entfernten Randteilen der Laufstreifen dargestellt. In diesem Falle ist die Bohrung 23 der Auspreßdüse 12 in zwei auseinanderführende Zweigbohrungen 23 gegabelt. Den mit gegenseitigem Abstand als Düsenmündungen vorgesehenen Einsatzstücken 13 sind dann in gleicher Weise Kontaktaufsätze 14 an dem Auspreß-Mundstück 6 zugeordnet.

**Patentansprüche**

1. Einrichtung zum Herstellen von flachen Profilsträngen aus plastischen Kautschuk- oder Kunststoffmischungen verschiedener Zusammensetzung durch Strangpressen, insbesondere von Rohlaufstreifen für Luftreifen mit einem zweischichtigen Mittelteil und zwei untereinander gleichartigen Randteilen, mit zwei unter einem spitzen Winkel über- oder nebeneinander angeordneten und nach einem gemeinsamen Auspreß-Mundstück (6) fördernden ersten Strangpressen (4, 5) und einer entgegen der Abzugsrichtung der Profilstränge an das Auspreß-Mundstück (6) angesetzten dritten Strangpresse (10), dadurch gekennzeichnet, daß die dritte Strangpresse (10) in Längsrichtung relativ zu den zwei ersten Strangpressen (4, 5) verschiebbar und in nur kraftschlüssiger Verbindung dichtend an das Auspreß-Mundstück (6) angesetzt ist, wobei mindestens ein einen Endanschlag für die Auspreßdüse (12) der dritten Strangpresse (10) bildender nippelartiger Kontaktaufsatz (14) auf der den zwei ersten Strangpressen (4, 5) abgekehrten Frontplatte des Auspreß-Mundstückes (6) vorgesehen ist, dessen nach außen offene durchgehende Bohrung (24) sich unter Richtungsänderung innerhalb des Mundstückes nach formgebenden Bereichen öffnet.

2. Einrichtung nach Anspruch 1, dadurch gekennzeichnet, daß jeder Kontaktaufsatz (14) mit einer kugelig gewölbten Anschlagfläche ausgebildet ist.

3. Einrichtung nach Anspruch 2, dadurch gekennzeichnet, daß die Austrittsmündung(en) der Auspreßdüse (12, 13) der dritten Strangpresse (10) mit einer der Anschlagfläche des jeweiligen Kontaktaufsatzse (14) angepaßten kugeligen Wölbung aufgeweitet ist (sind).

4. Einrichtung nach Anspruch 2, dadurch gekennzeichnet, daß die Austrittsmündung(en) der Auspreßdüse (12, 13) der dritten Strangpresse (10) kegelig aufgeweitet ist (sind).

5. Einrichtung nach einem der Ansprüche 1 bis 4, dadurch gekennzeichnet, daß die dritte Strangpresse (10) ober- oder unterhalb der Abzugsebene des Profilstranges (8) unter einem spitzen Winkel gegen diese angeordnet ist.

6. Einrichtung nach einem der Ansprüche 1 bis 4, dadurch gekennzeichnet, daß die dritte Strangpresse (10) in der Abzugsebene des Profilstranges (8) oder parallel dazu und unter einem spitzen Winkel gegen die Abzugsrichtung angeordnet ist.

7. Einrichtung nach Anspruch 5 oder 6, dadurch gekennzeichnet, daß der Kontaktaufsatz bzw. die Kontaktaufsätze (14) unter einem spitzen Winkel gegen die Abzugsrichtung des Profilstranges (8) in der Längsachse der dritten Strangpresse (10) ausgerichtet auf der Frontplatte des Auspreß-Mundstückes (6) angebracht ist bzw. sind.

## Claims

1. Apparatus for producing flat extruded profiles from plastic mixtures of rubber or plastics material of various compositions by extruders, especially untreated tread strips for pneumatic tyres, having a two-layered central portion and two edge portions which are similar to each other, two first extruders (4, 5) which are disposed above or adjacent one another at an acute angle to each other and feed towards a common extrusion mouthpiece (6) , and a third extruder (10) which is attached to the extrusion mouthpiece (6) in opposition to the discharge direction of the extruded profiles, characterised in that the third extruder (10) is attached to the extrusion mouthpiece (6) so as to be longitudinally displaceable relative to the two first extruders (4, 5) and so as to seal in only a frictional connection, at least one nipple-like contact attachment (14) forming an end stop for the extrusion nozzle (12) of the third extruder (10) and being provided on the front plate of the extrusion mouthpiece (6) remote from the two first extruders (4, 5), and the outwardly open, continuous bore (24) in the extrusion mouthpiece opens towards moulding regions by changing direction within the mouthpiece.

2. Apparatus according to claim 1, characterised in that each contact attachment (14) is provided with a spherically curved stop face.

3. Apparatus according to claim 2, characterised in that the discharge mouth(s) of the extrusion nozzle (12, 13) of the third extruder (10) is (are) widened by a spherical curvature which is adapted to the stop face of the particular contact attachment (14).

4. Apparatus according to claim 2, characterised in that the discharge mouth(s) of the extrusion nozzle (12, 13) of the third extruder (10) is (are) conically widened.

5. Apparatus according to one of claims 1 to 4, characterised in that the third extruder (10) is disposed above or below the discharge plane of the extruded profile (8) at an acute angle relative to said plane.

6. Apparatus according to one of claims 1 to 4, characterised in that the third extuder (10) is disposed in the discharge plane of the extruded profile (8) or parallel thereto and at an acute angle relative to the discharge direction.

7. Apparatus according to claim 5 or 6, characterised in that the contact attachment or the contact attachments (14) is or are mounted on the front plate of the extrusion mouthpiece (6) so as to be aligned at an acute angle relative to the discharge direction of the extruded profile (8) in the longitudinal axis of the third extruder (10).

## Revendications

1. Dispositif pour fabriquer des profilés plats constitués par des mélanges plastiques de caoutchouc ou de matières plastiques de composition variable par extrusion, notamment des ébauches de bandes de roulement pour pneumatiques possédant une zone médiane à deux couches et deux parties marginales identiques entre elles, et comportant deux premières extrudeuses (4, 5) disposées l'une au-dessus de l'autre ou côte-à-côte en faisant entre elles un angle aigu et exécutant un entraînement en direction d'une embouchure d'éjection (6), et une troisième extrudeuse (10) raccordée à l'embouchure d'éjection (6) à l'encontre de la direction de tirage des profilés, caractérisé en ce que la troisième extrudeuse (10) est raccordée d'une manière étanche à l'embouchure de sortie (6) selon uniquement une liaison de force et de manière à être déplaçable dans la direction longitudinale par rapport aux deux premières extrudeuses (4, 5), tandis qu'il est prévu, sur la plaque avant, tournée à l'opposé des deux premières extrudeuses (4, 5), de l'embouchure d'éjection (6) au moins un embout rapporté de contact (14) de forme de raccord fileté constituant une butée d'extrémité pour la buse d'éjection (12) de la troisième extrudeuse (10) et dont le perçage (24) s'ouvrant à l'extérieur débouche dans des zones de formage, avec changement de direction à l'intérieur de l'embouchure.

2. Dispositif selon la revendication 1, caractérisé en ce que chaque embout rapporté de contact (14) est réalisé avec une surface de butée cintrée de forme sphérique.

3. Dispositif selon la revendication 2, caractérisé en ce que la ou les embouchures de sortie de la buse d'éjection (12, 13) de la troisième extrudeuse (10) s'élargissent en présentant un cintrage de forme sphérique adapté à la surface de butée de l'embout rapporté de contact respectif (14).

4. Dispositif selon la revendication 2, caractérisé en ce que la ou les embouchures de sortie des buses d'éjection (12, 13) de la troisième extrudeuse (10) s'élargissent avec une forme conique.

5. Dispositif selon l'une quelconque des revendications 1 à 4, caractérisé en ce que la troisième extrudeuse (10) est disposée au-dessus ou au-dessous du plan de tirage du profilé (8), en faisant un angle aigu par rapport à ce plan.

6. Dispositif selon l'une quelconques des revendications 1 à 4, caractérisé en ce que la troisième extrudeuse (10) est disposée dans le plan de tirage du profilé (8) ou parallèlement à ce dernier et en faisant un angle aigu par rapport à la direction de tirage.

7. Dispositif selon l'une des revendications 5 ou 6, caractérisé en ce que le ou les embouts rapportés de contact (14) sont installés sur la plaque avant de l'embouchure d'éjection (6) suivant l'axe longitudinal de la troisième extrudeuse (10) en faisant un angle aigu par rapport à la direction de tirage du profilé (8).

FIG.1

0 157 103

FIG. 2

FIG. 3